# EUROPEAN PATENT APPLICATION

(11) **EP 3 644 425 A1**
(43) Date of publication of application: **29.04.2020**
(21) Application number: 18820284.0
(22) Date of filing: 19.04.2018
(51) Int. Cl.: H01M 8/18, C22C 14/00, H01M 8/0206, H01M 8/0208, H01M 8/026

(54) **REDOX FLOW BATTERY**

(30) Priority: 21.06.2017 JP 2017121744
(71) Applicant: Sumitomo Electric Industries, Ltd., Osaka-shi, Osaka 541-0041 (JP)
(72) Inventor: HANAFUSA Kei, Osaka-shi Osaka 554-0024 (JP); NAKAISHI Hiroyuki, Osaka-shi Osaka 554-0024 (JP); NAKAYAMA Shigeyoshi, Osaka-shi Osaka 554-0024 (JP)
(74) Representative: Boult Wade Tennant LLP
(86) International application number: PCT/JP2018/016059
(87) International publication number: WO 2018/235419

(57) **Abstract**

A redox flow battery includes: a battery cell including a positive electrode, a negative electrode, and a membrane interposed between the positive electrode and the negative electrode; a pair of cell frames each including a bipolar plate and a frame body surrounding a circumferential edge of the bipolar plate, the pair of cell frames holding the battery cell therebetween; a positive electrolyte supplied to the positive electrode; and a negative electrolyte supplied to the negative electrode. The bipolar plate is formed of pure titanium or a titanium alloy, and the negative electrolyte has an oxidation-reduction potential of 0.0 V or higher relative to a standard hydrogen electrode.

## Description

### Technical Field

The present invention relates to a redox flow battery.

The present application claims priority from Japanese Patent Application No. 2017-121744 filed on June 21, 2017, the entire contents of which are incorporated herein by reference.

### Background Art

PTL 1 discloses a redox flow battery including, as main components, battery cells each including: a positive electrode to which a positive electrolyte is supplied; a negative electrode to which a negative electrolyte is supplied; and a membrane interposed between the positive electrode and the negative electrode. During charge/discharge of the redox flow battery, the positive and negative electrolytes are supplied to their respective electrodes. In each battery cell, a layered body composed of the positive electrode, the membrane, and the negative electrode is sandwiched between a pair of cell frames. Each of the cell frames includes: a bipolar plate with positive and negative electrodes disposed on its front and back sides, respectively; and a frame body disposed on the outer circumference of the bipolar plate. The bipolar plate is formed of an electrically conductive carbon plastic containing graphite.

### Citation List

### Patent Literature

PTL 1: Japanese Unexamined Patent Application Publication No. 2015-210849

### Summary of Invention

The redox flow battery according to the present disclosure includes:
a battery cell including a positive electrode, a negative electrode, and a membrane interposed between the positive electrode and the negative electrode;
a pair of cell frames each including a bipolar plate and a frame body surrounding a circumferential edge of the bipolar plate, the pair of cell frames holding the battery cell therebetween;
a positive electrolyte supplied to the positive electrode; and
a negative electrolyte supplied to the negative electrode,
wherein the bipolar plate is formed of pure titanium or a titanium alloy, and
wherein the negative electrolyte has an oxidation-reduction potential of 0.0 V or higher relative to a standard hydrogen electrode.

### Brief Description of Drawings

[Fig. 1] Figure 1 is an illustration showing the principle of operation of a redox flow battery according to embodiment 1.
[Fig. 2] Figure 2 is a schematic structural diagram of the redox flow battery according to embodiment 1.
[Fig. 3] Figure 3 is a schematic structural diagram of a cell stack included in the redox flow battery according to embodiment 1.
[Fig. 4] Figure 4 is a schematic plan view of a bipolar plate included in a redox flow battery according to embodiment 2 when the bipolar plate is viewed from one side.
[Fig. 5] Figure 5 is a schematic cross-sectional view showing bipolar plates included in the redox flow battery according to embodiment 2.
[Fig. 6] Figure 6 is a schematic plan view of a bipolar plate included in a redox flow battery according to embodiment 3 when the bipolar plate is viewed from one side.
[Fig. 7] Figure 7 is a schematic perspective view showing the bipolar plate included in the redox flow battery according to embodiment 3.
[Fig. 8] Figure 8 is a schematic diagram showing a state in which a frame body of a cell frame included in a redox flow battery according to embodiment 4 is attached to a bipolar plate of the cell frame.
[Fig. 9] Figure 9 is a schematic diagram showing a state in which a frame body of a cell frame included in a redox flow battery according to embodiment 5 is attached to a bipolar plate of the cell frame.

### Description of Embodiments

### [Problems to be Solved by Present Disclosure]

There is a need for a redox flow battery that can maintain its performance stably for a long time.

Accordingly, it is one object to provide a redox flow battery that can maintain its performance stably for a long time.

### [Advantageous Effects of Present Disclosure]

The redox flow battery according to the present disclosure can maintain its performance stably for a long time.

### [Description of Embodiments of Present Invention]

It has been found that, when a bipolar plate made of an electrically conductive carbon plastic is used, the bipolar plate may undergo oxidative deterioration in an electrolyte during long-term operation of a redox flow battery (hereinafter may be referred to as an RF battery). When the bipolar plate undergoes oxidative deterioration, the thickness of the bipolar plate may be reduced, so that its mechanical strength may deteriorate. Moreover, a hole may be formed in the bipolar plate, so that the function of the battery itself may not be maintained.

The present inventors have conducted studies on the use of a titanium-based bipolar plate in order to prevent the oxidative deterioration of the bipolar plate during long-term used of an RF battery. However, the inventors have found that, even when the titanium-based bipolar plate is used, the titanium-based bipolar plate undergoes oxidative deterioration (dissolution) on the negative electrode side, depending on the type of electrolyte. Therefore, the inventors have conducted studies on a negative electrolyte that can prevent dissolution of the titanium-based bipolar plate. The inventors have found that the use of an electrolyte having a specific potential as the negative electrolyte can prevent the dissolution of the titanium-based bipolar plate, so that an RF battery capable of maintaining its performance stably for a long time can be obtained. Thus, the present invention has been completed. Next, the details of embodiments of the present invention will be enumerated and described.
(1) A redox flow battery according to an embodiment of the present invention includes:
   a battery cell including a positive electrode, a negative electrode, and a membrane interposed between the positive electrode and the negative electrode;
   a pair of cell frames each including a bipolar plate and a frame body surrounding a circumferential edge of the bipolar plate, the pair of cell frames holding the battery cell therebetween;
   a positive electrolyte supplied to the positive electrode; and
   a negative electrolyte supplied to the negative electrode,
   wherein the bipolar plate is formed of pure titanium or a titanium alloy, and
   wherein the negative electrolyte has an oxidation-reduction potential of 0.0 V or higher relative to a standard hydrogen electrode.

   Since the titanium-based bipolar plate formed of pure titanium or a titanium alloy is used as the bipolar plate, oxidative deterioration of the bipolar plate can be less than that when a bipolar plate made of an electrically conductive carbon plastic is used. Since the negative electrolyte used is an electrolyte having an oxidation-reduction potential of 0.0 V or higher relative to the standard hydrogen electrode, the oxidative deterioration (dissolution) of the bipolar plate caused by the negative electrolyte can be reduced even when the titanium-based bipolar plate is used on the negative electrode side, so that the durability of the bipolar plate can be improved. This is because, when the titanium-based bipolar plate is used, a passivation film is formed on the surface of the bipolar plate, and the inner side of the passivation film (i.e., the bipolar plate) can be protected. Moreover, since the negative electrolyte used is an electrolyte having a specific oxidation-reduction potential, the dissolution of the passivation film can be prevented. Since the durability of the bipolar plate can be improved, the RF battery can maintain its performance stably for a long time.
(2) In one aspect of the redox flow battery, the titanium alloy may contain 95% by mass or more of titanium and may further contain at least one element selected from platinum, palladium, ruthenium, nickel, and chromium in a total amount of 0.4% by mass or more and 5% by mass or less.
   When the bipolar plate is formed of the titanium alloy, if any of the above listed elements is contained, titanium is unlikely to be brought to an active state, so that the dissolution of the bipolar plate can be further reduced.
(3) In one aspect of the redox flow battery, the negative electrolyte may contain at least one active material selected from titanium ions, iron ions, manganese ions, and cerium ions.
   When the negative electrolyte containing any of the above-listed active materials is used, titanium is unlikely to be brought to an active state, so that the dissolution of the bipolar plate can be further reduced.
(4) In one aspect of the redox flow battery, the concentration of hydrogen ions in the negative electrolyte may be 0.1 mol/L or more.
   When the concentration of hydrogen ions in the negative electrolyte is 0.1 mol/L or more, the surface of the bipolar plate is unlikely to be brought to an active state, so that the dissolution of the bipolar plate can be further reduced.
(5) In one aspect of the redox flow battery, the negative electrolyte may contain sulfate radicals, and the concentration of the sulfate radicals in the negative electrolyte may be 2 mol/L or more.
   When the negative electrolyte contains the sulfate radicals, the stability and reactivity of metal ions serving as the active material in the negative electrolyte can be improved. When the concentration of the sulfate radicals is 2 mol/L or more, the dissolution of the passivation film formed on the surface of the bipolar plate can be easily reduced, and the dissolution of the bipolar plate can thereby be reduced.
(6) In one aspect of the redox flow battery, the negative electrolyte may contain at least one metal selected from iron, copper, antimony, and platinum in a total amount of 0.01 mmol/L or more and 0.1 mol/L or less.
   When the negative electrolyte containing any of the above-listed metals is used, the surface of the bipolar plate is unlikely to be brought to an active state, so that the dissolution of the bipolar plate can be further reduced.
(7) In one aspect of the redox flow battery, the bipolar plate may include grooves through which the positive electrolyte or the negative electrolyte circulates, the grooves being provided on at least one of a positive electrode-side surface in contact with the positive electrode and a negative electrode-side surface in contact with the negative electrode.
   When the bipolar plate includes the grooves, the circulation of the electrolyte is facilitated as compared to that when no grooves are provided, so that the flow of the electrolyte circulating through the electrode can be controlled. By controlling the flow of the electrolyte, the pressure loss of the electrolyte can be reduced.
(8) In one aspect of the redox flow battery, the grooves may be formed on both the positive electrode-side surface and the negative electrode-side surface by bending the bipolar plate.
   When the titanium-based bipolar plate is used, the grooves can be easily formed by bending the bipolar plate. Since the grooves can be formed by bending, the bipolar plate can have a uniform thickness, so that a reduction in the mechanical strength of the bipolar plate can be easily prevented. Since the grooves can be formed by bending, the grooves can be easily formed on both the positive electrode-side surface and negative electrode-side surface of the bipolar plate by bending the bipolar plate into, for example, a wavy shape.
(9) In one aspect of the redox flow battery, the bipolar plate may be formed by stacking two bipolar plate pieces, and the grooves may be provided on both the positive electrode-side surface and the negative electrode-side surface.
   When the bipolar plate is formed by stacking the two bipolar plate pieces, the grooves on the positive electrode-side surface of the bipolar plate and the grooves on the negative electrode-side surface can be easily formed to be symmetric to each other.
(10) In one aspect of the redox flow battery, the distance between a positive electrode-side surface of the bipolar plate that is in contact with the positive electrode and a negative electrode-side surface in contact with the negative electrode-side surface may be 3 mm or more and 7 mm or less.
   When the distance in the bipolar plate is 3 mm or more, a reduction in the mechanical strength of the bipolar plate can be prevented. When the distance is 7 mm or less, an increase in size due to the thickness of the bipolar plate can be prevented.
(11) In one aspect of the redox flow battery, the redox flow battery may further include: an engaging protrusion that is provided in one of the bipolar plate and the frame body; and an engaging recess that is provided in the other one of the bipolar plate and the frame body and engages the engaging protrusion.

When the bipolar plate and the frame body engage each other through the engaging protrusion and the engaging recess, the internal pressure of the electrolyte acting on the frame body can be shared by the frame body and the bipolar plate, so that the frame body can be prevented from undergoing excessive stress. When the titanium-based bipolar plate is used, the engaging protrusion and the engaging recess can be easily formed in the bipolar plate.

### [Details of Embodiments of Present Invention]

Referring next to the drawings, redox flow batteries (RF batteries) according to embodiments of the present invention will be described in detail. In the drawings, the same numerals denote components with the same names. In the drawings, the thickness of each of the components (such as a bipolar plate and electrodes) is exaggerated. Therefore, the thickness etc. of each component may differ from its actual thickness etc.

### «Embodiment 1»

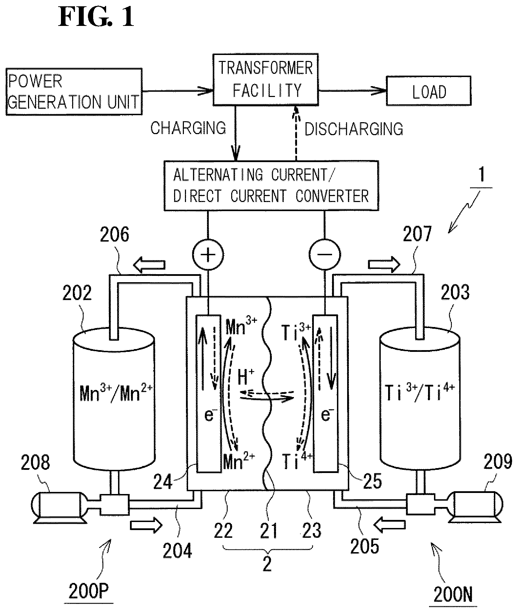

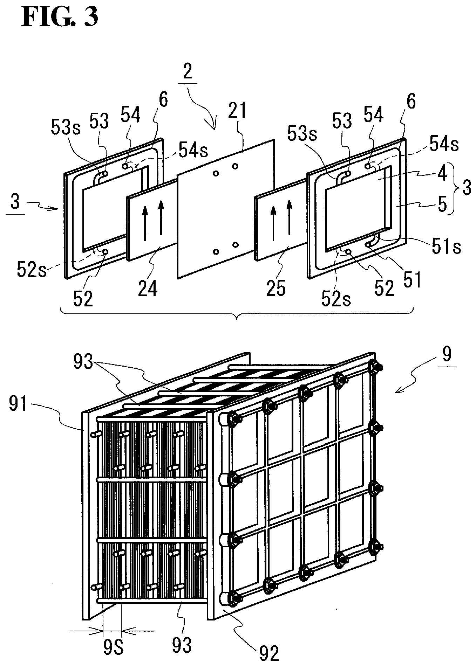

As shown in Figure 1, an RF battery 1 according to embodiment 1 includes: battery cells 2; and circulation mechanisms (a positive electrolyte circulation mechanism 200P and a negative electrolyte circulation mechanism 200N) that supply electrolytes to the battery cells 2 in a circulating manner. Each battery cell 2 is separated by a membrane 21 into a positive cell 22 and a negative cell 23. A positive electrode 24 to which a positive electrolyte is supplied is installed in the positive cell 22, and a negative electrode 25 to which a negative electrolyte is supplied is installed in the negative cell 23. As shown in Figure 3, the battery cell 2 is sandwiched between a pair of cell frames 3, 3. Each cell frame 3 includes: a bipolar plate 4 in which a positive electrode 24 and a negative electrode 25 are disposed on its front and back side, respectively; and a frame body 5 surrounding the circumferential edges of the bipolar plate 4.

One feature of the RF battery 1 in embodiment 1 is that it has a structure that can reduce oxidative deterioration (dissolution) of the bipolar plates 4 during long-term operation of the RF battery 1 and allows its performance to be maintained stably for a long time. Specifically, this feature means that each bipolar plate 4 used is a titanium (Ti)-based bipolar plate and that an electrolyte with a specific potential is used. The basic structure of the RF battery 1 will be described, and then the features of the RF battery 1, i.e., the bipolar plate and the electrolyte will be described in detail.

### [Basic structure of RF battery]

Typically, as shown in Figure 1, the RF battery 1 is connected to a power generation unit and a load such as a power system or a consumer through an alternating current/direct current converter, a transformer facility, etc. The RF battery 1 is charged using the power generation unit as an electric power supply source and discharged using the load as a power consumer. Examples of the power generation unit include a solar photovoltaic power generator, a wind power generator, and other general power stations.

The positive electrode 24 and the negative electrode 25 installed in each battery cell 2 serve as reaction fields in which active materials contained in the supplied electrolytes undergo battery reactions. The membrane 21 is a separation member that separates the positive electrode 24 and the negative electrode 25 from each other and allows specific ions to pass through. Each bipolar plate 4 is formed of a conductive material that allows a current to pass through but does not allow the electrolytes to pass through. The bipolar plate 4 is disposed such that a positive electrode 24 is in contact with its one surface and a negative electrode 25 is in contact with the other surface. Each frame body 5 forms an inner region serving as a battery cell 2. Specifically, the thickness of the frame body 5 is larger than the thickness of the bipolar plate 4, and the circumferential edges of the bipolar plate 4 are surrounded by the frame body 5. In this manner, a step that forms a space in which the positive electrode 24 (the negative electrode 25) is disposed is formed between the front (back) surface of the bipolar plate 4 and the front (back) surface of the frame body 5.

The positive electrolyte circulation mechanism 200P that supplies the positive electrolyte to the positive cells 22 in a circulating manner includes: a positive electrolyte tank 202 that stores the positive electrolyte; pipes 204 and 206 that connect the positive electrolyte tank 202 to the positive cells 22; and a pump 208 disposed in the pipe 204 on the upstream side (supply side). The negative electrolyte circulation mechanism 200N that supplies the negative electrolyte to the negative cells 23 in a circulating manner includes: a negative electrolyte tank 203 that stores the negative electrolyte; pipes 205 and 207 that connect the negative electrolyte tank 203 to the negative cells 23; and a pump 209 disposed in the pipe 205 on the upstream side (supply side).

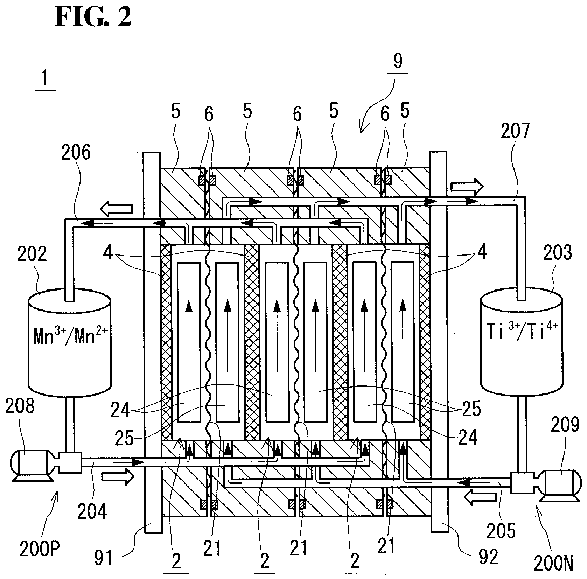

The positive electrolyte is supplied from the positive electrolyte tank 202 through the pipe 204 on the upstream side to the positive electrodes 24 and returned from the positive electrodes 24 through the pipe 206 on the downstream side (discharge side) to the positive electrolyte tank 202. The negative electrolyte is supplied from the negative electrolyte tank 203 through the pipe 205 on the upstream side to the negative electrodes 25 and returned from the negative electrodes 25 through the pipe 207 on the downstream side (discharge side) to the negative electrolyte tank 203. In Figures 1 and 2, manganese (Mn) ions and titanium (Ti) ions shown in the positive electrolyte tank 202 and the negative electrolyte tank 203, respectively, are examples of the types of ions contained in the positive electrolyte and the negative electrolyte as active materials. In Figure 1, solid arrows indicate charging, and broken arrows indicate discharging. The positive electrolyte and the negative electrolyte are circulated. Therefore, while the positive electrolyte is supplied to the positive electrode 24 in a circulating manner and the negative electrolyte is supplied to the negative electrode 25 in a circulating manner, charge/discharge is performed through valence change reactions of the active material ions in the electrolytes for the electrodes.

Typically, the RF battery 1 is used in the form of a cell stack 9 including a plurality of battery cells 2 stacked one on another. As shown in Figure 3, the cell stack 9 includes: a layered body prepared by repeatedly stacking a first cell frame 3, a positive electrode 24, a membrane 21, a negative electrode 25, and a second cell frame 3; a pair of end plates 91 and 92 holding the layered body therebetween; connecting members 93 such as long bolts connecting the end plates 91 and 92; and tightening members such as nuts. When the end plates 91 and 92 are tightened with the tightening members, the stacked state of the layered body is maintained by the tightening force in the stacking direction. A prescribed number of battery cells 2 form a substack, and the cell stack 9 used includes a plurality of substacks 9S stacked one on another. In cell frames 3 at opposite ends, with respect to the stacking direction of the battery cells, of each of the substacks 9S and the cell stack 9, supply/drainage plates (not shown) are disposed instead of the bipolar plates 4.

The electrolytes are supplied to the respective electrodes, i.e., the positive electrode 24 and the negative electrode 25, for each cell frame 3 through liquid supply manifolds 51 and 52, liquid supply guide grooves 51s and 52s, and liquid supply rectifying portions (not shown) that are formed on one of a pair of sides facing each other (a liquid supply side, the lower side in the drawing sheet of Figure 3) of the frame body 5. The electrolytes are discharged from the respective electrodes, i.e., the positive electrode 24 and the negative electrode 25, through liquid discharge rectifying portions (not shown), liquid discharge guide grooves 53s and 54s, and liquid discharge manifolds 53 and 54 that are formed on the other one of the pair of sides facing each other (a liquid discharge side, the upper side in the drawing sheet of Figure 3) of the frame body 5. The positive electrolyte is supplied to the positive electrode 24 from the liquid supply manifold 51 through the liquid supply guide groove 51s formed on a first surface (the front surface in the drawing sheet) of the frame body 5. The positive electrolyte flows from the lower side of the positive electrode 24 to the upper side as shown by arrows in the upper part of Figure 3 and then discharged to the liquid discharge manifold 53 through the liquid discharge guide groove 53s formed on the first surface (the front surface in the drawing sheet) of the frame body 5. The negative electrolyte is supplied and discharged in the same manner as that of the positive electrolyte except that the negative electrolyte is supplied and discharged on a second surface (the back surface in the drawing sheet) of the frame body 5. Ring-shaped sealing members 6 such as O-rings or flat packings (Figures 2 and 3) are disposed between frame bodies 5 to prevent leakage of the electrolytes from the battery cells 2. Sealing grooves (not shown) for placing the ring-shaped sealing members 6 are formed circumferentially in the frame bodies 5.

A well-known structure may be appropriately used for the basic structure of the RF battery 1 described above.

### [Bipolar plates]

As shown in Figure 3, each bipolar plate 4 is a rectangular flat plate. One feature of the RF battery 1 in embodiment 1 is that each bipolar plate 4 is formed from pure titanium or a titanium alloy. When the titanium-based bipolar plate 4 is used, a passivation film is formed on the surface of the bipolar plate 4, and the inner side of the passivation film (i.e., the bipolar plate 4) can be protected.

Examples of the pure titanium include pure titanium type 1 to pure titanium type 4 specified in JIS H 4600:2012.

The titanium alloy is a titanium-based alloy containing titanium (Ti) in an amount of 95% by mass or more, preferably 97% by mass or more, and 98% by mass or more and further containing an additive element other than titanium. The additive element in the titanium alloy is at least one selected from platinum (Pt), palladium (Pd), ruthenium (Ru), nickel (Ni), and chromium (Cr). When the additive elements are contained, titanium is unlikely to be brought to an active state, and the passivation film is easily formed on the surface of the bipolar plate 4. The total amount of the additive elements is 0.4% by mass or more and 5% by mass or less and 0.5% by mass or more and 2% by mass or less. The titanium alloy may further contain unavoidable impurities.

The bipolar plate 4 may have a thickness of 0.3 mm or more and 0.7 mm or less. When the thickness of the bipolar plates 4 is small, the thickness of the battery cells 2 of the RF battery 1 in the stacking direction can be reduced accordingly, and the RF battery 1 can be reduced in size. Therefore, the thickness of the bipolar plates 4 is preferably 0.5 mm or less and 0.4 mm or less. When the bipolar plates 4 are formed of a titanium-based material, the thickness of the bipolar plates 4 can be easily reduced. When the thickness of the bipolar plates 4 is 0.3 mm or more, the bipolar plates 4 resist damage when the battery cells 2 sandwiched between cell frames 3 are tightened in the stacking direction of the battery cells 2.

Each bipolar plate 4 may have a rough surface or grooves on at least part of at least one of the positive electrode-side surface in contact with the positive electrode 24 and the negative electrode-side surface in contact with the negative electrode 25. When the bipolar plate 4 has a rough surface, friction easily occurs between the bipolar plate 4 and the positive electrode 24 or the negative electrode 25, and positional displacement of the positive electrode 24 or the negative electrode 25 relative to the bipolar plate 4 can be easily prevented. When the bipolar plate 4 has the rough surface, the flow velocity of an electrolyte is easily changed to cause turbulence, and the electrolyte can be forcedly diffused to the positive electrode 24 or the negative electrode 25 in contact with the bipolar plate 4 with ease, so that the reactivity of the battery can be easily improved. When the bipolar plate 4 has grooves, the flow of an electrolyte flowing to the positive electrode 24 or the negative electrode 25 can be controlled, and the pressure loss of the electrolyte can be easily reduced. The manner of forming the grooves in the bipolar plate 4 will be described in detail in embodiment 2 described later.

### [Electrolytes]

One feature of the RF battery 1 in embodiment 1 is that the negative electrolyte has an oxidation-reduction potential of 0.0 V or higher relative to the standard hydrogen electrode. When an electrolyte with a specific potential is used as the negative electrolyte, dissolution of the passivation film formed on the surface of each bipolar plate 4 can be reduced. The positive electrolyte is not limited to the electrolyte with the specific potential.

In this example, the negative electrolyte contains, as the active material, metal ions whose valence is changed by oxidation/reduction. When the active material is metal ions, the negative electrolyte may contain at least one type of active material ions selected from titanium (Ti) ions, iron (Fe) ions, manganese (Mn) ions, and cerium (Ce) ions. The ions of a metal element are present in the negative electrolyte as at least one type of ions with a specific valence, and a plurality of types of ions of a single element with different valences may be present. Among the metal ions listed above, one type of metal ions may be contained, or a plurality of types of metal ions may be contained. When a plurality of types of metal ions are contained, they are combined such that the oxidation-reduction potential of the negative electrolyte relative to the standard hydrogen electrode is 0.0 V or higher.

The concentration of the above metal ions used as the active material (the total concentration when a plurality of types of metal ions are contained) may be 0.3 mol/L or more and 5 mol/L or less. When the concentration is 0.3 mol/L or more, the RF battery 1 can have an energy density (e.g., about 10 kWh/m³) large enough for a high-capacity storage battery. The higher the concentration, the higher the energy density. Therefore, the concentration is 0.5 mol/L or more, 1.0 mol/L or more, 1.2 mol/L or more, and 1.5 mol/L or more. In consideration of solubility in a solvent, the concentration is 5 mol/L or less and 2 mol/L or less in terms of ease of use. In this case, high electrolyte productivity is obtained.

The oxidation-reduction potential of the negative electrolyte relative to the standard hydrogen electrode can be changed by changing the type and concentration of metal ions contained as the active material. For example, when the negative electrolyte contains titanium ions in an amount of 0.5 mol/L or more and 2 mol/L or less, the oxidation-reduction potential relative to the standard hydrogen electrode can be 0.0 V or more and 0.2 V or less. The higher the oxidation-reduction potential relative to the standard hydrogen electrode, the further the dissolution of the passivation film formed on the surface of the bipolar plate 4 can be reduced. Therefore, the oxidation-reduction potential may be 0.02 V or higher and 0.1 V or higher. The oxidation-reduction potential relative to the standard hydrogen electrode satisfies the above values irrespective of charging depth.

The concentration of hydrogen ions in the negative electrolyte may be 0.1 mol/L or more. When the concentration of hydrogen ions is 0.1 mol/L or more, the surface of the bipolar plate 4 is unlikely to be brought to an active state, and the dissolution of the bipolar plate 4 can be easily reduced. The higher the concentration of hydrogen ions, the less likely the surface of the bipolar plate 4 is to be brought to an active state. Therefore, the concentration of hydrogen ions may be 1 mol/L or more and 1.5 mol/L or more.

The negative electrolyte may further contain at least one metal selected from iron (Fe), copper (Cu), antimony (Sb), and platinum (Pt) in a total amount of 0.01 mmol/L or more and 0.1 mol/L or less. When any of these metals are contained in a total amount of 0.01 mmol/L or more, the surface of the bipolar plate 4 is unlikely to be brought to an active state, so that the dissolution of the bipolar plate 4 can be easily reduced. The larger the amount of the metals contained, the less likely the surface of the bipolar plate 4 is to be brought to an active state. Therefore, the total amount may be 0.03 mmol/L or more, 0.05 mmol/L or more, and 0.1 mmol/L or more. In consideration of solubility in a solvent, the total content of the metals is 10 mmol /L or less and preferably 5 mmol/L or less.

The metal ions listed for the active material are water-soluble ions. Therefore, an aqueous solution using water as a solvent can be preferably used for the negative electrolyte. In particular, when the negative electrolyte is an aqueous acid solution containing sulfuric acid or a sulfate, the following effects can be expected. (1) The reactivity of the metal ions may be improved, and solubility may be improved. (2) Even when metal ions with a high potential are used, a side reaction is unlikely to occur (decomposition is unlikely to occur). (3) High ionic conductance is obtained, and the internal resistance of the battery is reduced. (4) Unlike the case where hydrochloric acid is used, chlorine gas is not generated. (5) The electrolyte can be easily obtained using water and, for example, a sulfate, and productivity is high. In the aqueous acid solution (electrolyte) produced using sulfuric acid or a sulfate, sulfate radicals (SO₄²⁻) are present. The concentration of the sulfate radicals may be 2 mol/L or more. When the concentration is 2 mol/L or more, the dissolution of the passivation film formed on the surface of the bipolar plate 4 can be easily reduced. The negative electrolyte used may be not only an aqueous solution produced using sulfuric acid or a sulfate but also an aqueous solution produced using a well-known acid or a well-known salt.

The electrolyte may contain, as the active material, organic molecules that undergo a reduction-oxidation reaction. Examples of such organic molecules include organic molecules having an unshared electron pair. With these organic molecules, donation or acceptance of electrons causes binding or unbinding of protons and the organic molecules, so that charge and discharge can be performed through the reduction-oxidation reaction. Examples of the organic molecules include quinone derivatives and viologen derivatives.

The positive electrolyte used may be an electrolyte with an oxidation-reduction potential of 0.0 V or higher relative to the standard hydrogen electrode, as is the negative electrolyte. The positive electrolyte is not limited to the electrolyte with a specific potential, and a well-known configuration may be used appropriately.

### [Effects]

In the RF battery 1 in embodiment 1, since the titanium-based bipolar plates 4 are used, the passivation film is formed on the surface of each bipolar plate 4, and the passivation film can reduce oxidative deterioration of the bipolar plate 4. Since the negative electrolyte with a specific potential is used, the dissolution of the passivation film formed on the surface of the bipolar plate 4 can be reduced. With the above configuration, the dissolution of the bipolar plates 4 can be prevented during long-term operation of the RF battery 1, and a reduction in thickness of the bipolar plates 4 can be prevented. For example, the rate of reduction in the thickness of the bipolar plates 4 after one year relative to the thickness at the beginning of the operation of the RF battery 1 can be 1% or less and 0.1% or less. Since the dissolution of the bipolar plates 4 can be reduced, the RF battery 1 can maintain its performance stably for a long time.

### [Applications]

The RF battery 1 in the embodiment can be used as a high-capacity storage battery used for the purpose of stabilizing fluctuations in power generation output, storing excess electricity generated, load leveling, etc. for power generation using natural energy such as solar photovoltaic power generation and wind power generation. The RF battery 1 in the embodiment can be preferably used as a high-capacity storage battery placed in a general power plant and used for the purpose of load leveling and for measures against momentary voltage drop and power failure.

### «Embodiment 2»

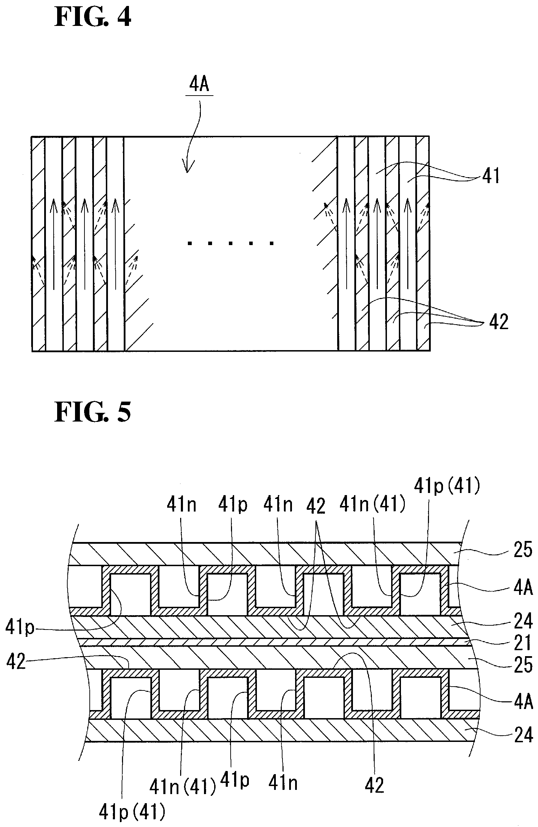

In embodiment 2, a description will be given of an RF battery including titanium-based bipolar plates 4A having grooves 41 on their surface, as shown in Figures 4 and 5. The RF battery according to embodiment 2 differs from that in embodiment 1 in that each bipolar plate 4A has grooves 41, and the other components are the same as those in embodiment 1.

In each bipolar plate 4A, a plurality of grooves 41 and rib portions 42 each located between adjacent grooves 41, 41 are provided on both the positive electrode-side surface in contact with a corresponding positive electrode 24 and the negative electrode-side surface in contact with a corresponding negative electrode 25. The plurality of grooves 41 function as flow channels through which the electrolytes flow. The positive electrolyte circulates through the grooves 41 disposed on the positive electrode-side surface, and the negative electrolyte circulates through the grooves 41 disposed on the negative electrode-side surface. The flows of the electrolytes in each battery cell 2 can be controlled by changing the shape and dimensions of the grooves 41. In Figure 4, the rib portions 42 are hatched for the ease of understanding.

In this example, the grooves 41 are formed as vertical grooves extending in a direction from one side of a frame body 5 (Figure 3) to another side (the vertical direction from the lower side toward the upper side in the drawing sheet of Figure 3). The rib portions 42 are located between respective adjacent grooves 41, 41 and form most of the outermost surface of the bipolar plate 4A. Therefore, when the battery cell 2 is assembled, the rib portions 42 are in contact with a positive electrode 24 or a negative electrode 25.

In each bipolar plate 4A, an electrolyte introduced from the liquid supply manifold 51(52) of the frame body 5 (Figure 3) through the liquid supply guide groove 51s (52s) and a liquid supply rectifying portion (not shown) is distributed to grooves 41 and spreads over the entire bipolar plate 4A. The flows of the electrolyte flowing through the grooves 41 are merged at a liquid discharge rectifying portion (not shown) of the frame body 5 (Figure 3) and discharged through the liquid discharge guide groove 53s from the liquid discharge manifold 53. The flows of the electrolytes in the bipolar plate 4A include flows along the grooves 41 (in the direction shown by solid arrows in Figure 4) and flows (in directions shown by broken arrows in Figure 4) flowing across the rib portions 42 located between adjacent grooves 41, 41 in the width direction (the horizontal direction in Figure 4). The electrolytes in the bipolar plates 4A penetrate and diffuse into the electrodes facing the respective bipolar plates 4A and undergo the battery reactions in the electrodes.

In this example, as shown in Figure 5, the grooves 41 are formed by bending the bipolar plates 4A into a wavy shape. In each bipolar plate 4A sandwiched between a corresponding positive electrode 24 and a corresponding negative electrode 25, the grooves 41 include positive-side grooves 41p formed so at to protrude toward the negative electrode 25 and negative-side grooves 41n formed so as to protrude toward the positive electrode 24, and the positive-side grooves 41p and the negative-side grooves 41n are arranged alternately. Therefore, in the bipolar plate 4A disposed between the positive electrode 24 and the negative electrode 25, the positive-side grooves 41p serve as grooves 41 when viewed from the positive electrode 24 side and serve as rib portions 42 when viewed from the negative electrode 25 side. Similarly, the negative-side grooves 41n serve as grooves 41 when viewed from the negative electrode 25 side and serve as rib portions 42 when viewed from the positive electrode 24 side.

Each of the positive-side grooves 41p is composed of a bottom surface and side surfaces that connect the bottom surface to the positive electrode-side surface of the bipolar plate 4A and has a rectangular cross-sectional shape. Similarly, each of the negative-side grooves 41n is composed of a bottom surface and side surfaces connecting the bottom surface to the negative electrode-side surface of the bipolar plate 4A and has a rectangular cross-sectional shape. Preferably, the cross-sectional shape of each of the positive-side grooves 41p and the negative-side grooves 41n has a flat bottom surface. This is because of the following reason. Each positive-side groove 41p (each negative-side groove 41n) serves as a rib portion 42 when viewed from the negative electrode 25 side (the positive electrode 24 side). Therefore, when the positive-side groove 41p (the negative-side groove 41n) has a flat bottom surface, the rib portion 42 can be in surface contact with the negative electrode 25 (the positive electrode 24). When the rib portions 42 are in surface contact with the positive electrode 24 or the negative electrode 25, an electrolyte flowing across the rib portions 42 can easily penetrate and diffuse into the positive electrode 24 or the negative electrode 25. The cross section of each of the positive-side grooves 41p and the negative-side grooves 41n may have a semicircular shape, a U shape, a V shape, etc.

The opening width of the grooves 41 may be appropriately selected according to the cross-sectional area of the grooves 41 and may be, for example, 0.1 mm or more and 10 mm or less and 0.7 mm or more and 2.5 mm or less.

The depth of the grooves 41 (the positive-side grooves 41p and the negative-side grooves 41n) may be 2.4 mm or more and 6 mm or less. When the depth of the grooves 41 is 2.4 mm or more, the grooves 41 can have a sufficient volume, and the circulatability of the electrolytes can be improved. When the depth of the grooves 41 is 6 mm or less, the thickness of the battery cells 2 in the RF battery 1 in the stacking direction can be reduced, and the RF battery 1 can be reduced in size. The depth of the grooves 41 may be 3 mm or more and 5.5 mm or less and particularly 3.5 mm or more and 5 mm or less.

In the bipolar plate 4A having the grooves 41 formed by bending the bipolar plate 4A into a wavy shape, the distance between the positive electrode-side surface in contact with the positive electrode 24 and the negative electrode-side surface in contact with the negative electrode 25 may be 3 mm or more and 7 mm or less. When the distance is 3 mm or more, the grooves 41 are easily formed by bending. When the distance is 7 mm or less, the thickness of the battery cells 2 in the RF battery 1 in the stacking direction can be reduced, and the RF battery 1 can be reduced in size. The distance may be 3 mm or more and 6 mm or less and particularly 4 mm or more and 5 mm or less.

The bipolar plate 4A having the grooves 41 formed by bending the bipolar plate 4A into a wavy shape can be produced by subjecting the material forming the bipolar plate 4A to press forming. Since the grooves 41 are formed by press forming, the thickness of the bipolar plate 4A is substantially uniform over the entire area.

In this example, since the bipolar plate 4A is formed of the titanium-based material, the grooves 41 can be easily formed by bending the bipolar plate 4A. In particular, by bending the bipolar plate 4A into a wavy shape, the grooves 41 can be easily formed on both the positive electrode-side surface and the negative electrode-side surface of the bipolar plate 4A.

### «Embodiment 3»

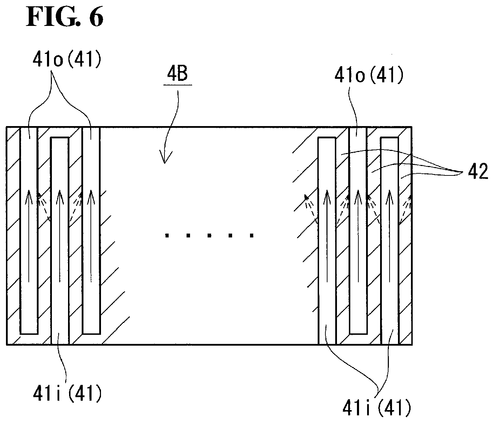

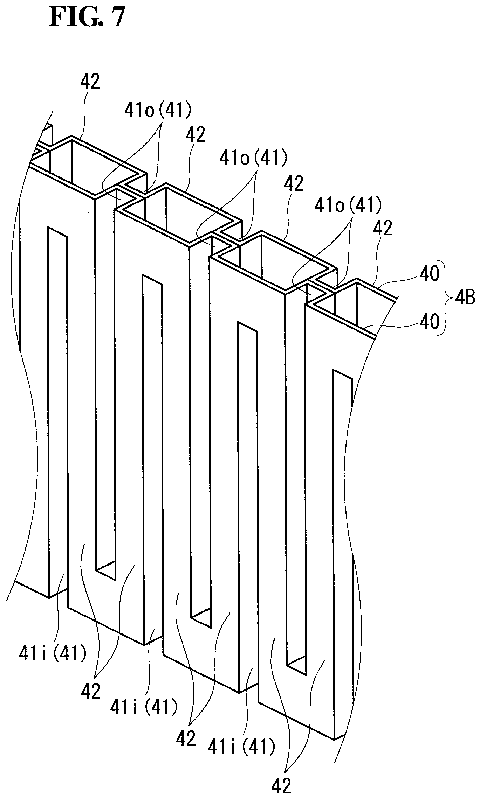

In embodiment 3, a description will be given of an RF battery including titanium-based bipolar plates 4B having grooves 41 with a non-communicating shape on their surface, as shown in Figures 6 and 7. In the RF battery according to embodiment 3, the shape of the grooves 41 provided in the bipolar plates 4B differs from that in embodiment 2, and the other components are the same as those in embodiment 2.

The grooves 41 are formed as vertical grooves having a non-communicating shape and extending in a direction from one side of a frame body 5 (Figure 3) toward another side (the vertical direction from the lower side toward the upper side in the drawing sheet of Figure 3). Specifically, the grooves 41 include introduction-side grooves 41i for introducing an electrolyte into an electrode and discharge-side grooves 41o for discharging the electrolyte from the electrode. The introduction-side grooves 41i and the discharge-side grooves 41o are not in communication with each other, are independent of one another, and are arranged alternately at prescribed intervals. The introduction-side grooves 41i, the discharge-side grooves 41o, liquid supply rectifying portions (not shown), and liquid discharge rectifying portions (not shown) of the frame body 5 form an interdigitated structure. A rib portion 42 is formed between an introduction-side groove 41i and a discharge-side grooves 41o adjacent to each other.

In each bipolar plate 4B, an electrolyte introduced from the liquid supply manifold 51(52) of the frame body 5 (Figure 3) through the liquid supply guide groove 51s (52s) and a liquid supply rectifying portion (not shown) is distributed to the introduction-side grooves 41i and spreads over the entire bipolar plate 4B. The electrolyte flowing through the introduction-side grooves 41i penetrates into an electrode facing the bipolar plate 4B, passes across the rib portions 42 of the bipolar plate 4B, and flows into the discharge-side grooves 41o adjacent to the introduction-side grooves 41i. The flows of the electrolyte flowing through the discharge-side grooves 41o are merged at a liquid discharge rectifying portion (not shown) of the frame body 5 (Figure 3) and discharged through the liquid discharge guide groove 53s from the liquid discharge manifold 53. The flows of the electrolyte in the bipolar plate 4B include flows along the introduction-side grooves 41i and the discharge-side grooves 41o (in the direction shown by solid arrows in Figure 6) and flows (in directions shown by broken arrows in Figure 6) flowing across the rib portions 42 located between the introduction-side grooves 41i and the discharge-side grooves 41o in the width direction (the horizontal direction in Figure 6). The electrolytes in the bipolar plates 4B penetrate and diffuse into the respective electrodes facing the bipolar plates 4B and undergo the battery reactions in the electrodes.

In this example, as shown in Figure 7, each bipolar plate 4B is formed by stacking two bipolar plate pieces 40. Each of the bipolar plate pieces 40 is bent such that the vertical grooves have a non-communicating shape. In each bipolar plate 4B, the two bipolar plate pieces 40 are stacked, so that the grooves 41 having a non-communicating shape are provided on both the positive electrode-side surface in contact with a corresponding positive electrode 24 and the negative electrode-side surface in contact with a corresponding negative electrode 25. In this case, the bipolar plate pieces 40 are stacked such that the grooves 41 are arranged symmetric, and therefore the grooves 41 on the positive electrode-side surface and the grooves 41 on the negative electrode-side surface can have the same shape. The distance between adjacent grooves 41, 41, i.e., the width of the rib portions 42, may be 100% or more and 700% or less of the width of the grooves 41 and 200% or more and 500% or less of the width of the grooves 41.

The bipolar plate 4B having the grooves 41 with a non-communicating shape and formed by stacking the two bipolar plate pieces 40 can be produced by subjecting the material forming the bipolar plate pieces 40 to press forming to form the grooves 41, stacking the bipolar plate pieces 40 with the back surfaces of the grooves 41 facing each other, and then laser-welding the bipolar plate pieces 40 together.

A bipolar plate having grooves with a non-communicating shape can be produced by using one bipolar plate and forming grooves and rib portions on the front and back surfaces of the bipolar plate when the material forming the bipolar plate is subjected to press forming. The grooves can be formed by subjecting the front and back surfaces of a flat plate with no grooves to cutting. In these cases, the thickness of portions of the bipolar plate in which the grooves are formed differs from the thickness of portions in which the rib portions are formed.

### «Embodiment 4»

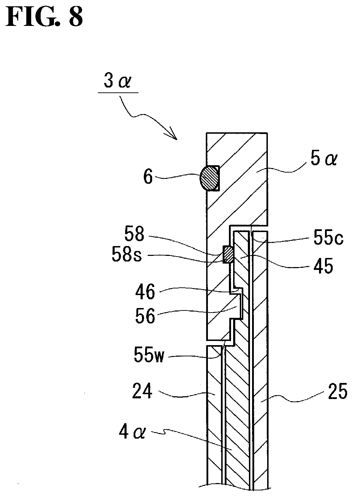

In embodiment 4, a description will be given of an RF battery including cell frames 3α each having an engagement structure in which a bipolar plate 4α engages a frame body 5α, as shown in Figure 8. The engagement structure includes engaging protrusions 56 provided in one of the bipolar plate 4α and the frame body 5α and engaging recesses 46 provided in the other one of the bipolar plate 4α and the frame body 5α. The RF battery according to embodiment 4 differs from embodiment 1 in that each cell frame 3α includes the engagement structure, and the other components are the same as those in embodiment 1.

Each cell frame 3α in this example is formed by fitting the bipolar plate 4α into an inner circumferential recess 55c of the frame body 5α.

The frame body 5α has an opening 55w passing through the frame body 5α in its thickness direction, and the bipolar plate 4α is disposed so as to fill the opening 55w. In the frame body 5α, its circumferential edge portion surrounding the entire opening 55w is thinner than the other portions of the frame body 5α, and the thin portion forms the inner circumferential recess 55c to which the bipolar plate 4α is fitted. In this example, the inner circumferential recess 55c is formed only on a first side (the right side in Figure 8) of the frame body 5α. Specifically, a second side (the left side in Figure 8) of the inner circumferential recess 55c is flush with the other portions of the frame body 5α.

The bipolar plate 4α has a thin portion 45 that is thinner than the other portions of the bipolar plate 4α and located in a portion that engages the inner circumferential recess 55c of the frame body 5α. The thin portion 45 of the bipolar plate 4α faces the inner circumferential recess 55c of the frame body 5α, and portions other than the thin portion 45 are fitted into the opening 55w of the frame body 5α. Therefore, the fitting state of the bipolar plate 4α with respect to the frame body 5α is easily stabilized.

In Figure 8, a positive electrode 24 is disposed on the left side of the bipolar plate 4α, and a negative electrode 25 is disposed on the right side. Since the inner circumferential recess 55c is formed in the frame body 5α, the length (the vertical length in Figure 8) of the negative electrode 25 is longer than the length of the positive electrode 24. The thickness of the bipolar plate 4α (except for the thin portion 45) is smaller than the thickness of the frame body 5α (except for the inner circumferential recess 55c), and the thickness of the thin portion 45 of the bipolar plate 4α is smaller than the depth of the inner circumferential recess 55c of the frame body 5α. Therefore, the total thickness of the bipolar plate 4α, the positive electrode 24, and the negative electrode 25 is substantially equal to the thickness of the frame body 5α (except for the inner circumferential recess 55c). Specifically, with the positive electrode 24 and the negative electrode 25 disposed on the frame body 5α and the bipolar plate 4α, the surfaces of the frame body 5α are substantially flush with the surface of the positive electrode 24 and the surface of the negative electrode 25. To prevent the electrolytes from flowing between the first and second sides of the bipolar plate 4α, a sealing member 58s is disposed between the frame body 5α and the bipolar plate 4α. In this example, a sealing groove 58 is formed in the inner circumferential recess 55c of the frame body 5α, and the sealing member 58s is disposed in the sealing groove 58. The sealing groove may be formed on the bipolar plate 4α side.

In this example, the frame body 5α has the engaging protrusions 56, and the bipolar plate 4α has the engaging recesses 46. Specifically, the engaging protrusions 56 are disposed in the inner circumferential recess 55c of the frame body 5α and located inward of the sealing groove 58, and the engaging recesses 46 are disposed in the thin portion 45 of the bipolar plate 4α so as to correspond to the engaging protrusions 56. In this example, the engaging protrusions 56 are formed as elongated protrusions, and the engaging recesses 46 are formed as grooves.

The engaging protrusions 56 and the engaging recesses 46 may be disposed continuously on one of opposite sides (the liquid supply side, the lower side in the drawing sheet of Figure 3) of the frame body 5α and the other one of the opposite sides (the liquid discharge side, the upper side of the drawing sheet of Figure 3) so as to extend in the longitudinal direction or may be disposed intermittently in a plurality of portions.

The depth of the engaging recesses 46 may be 10% or more and 50% or less of the thickness of the member forming the engaging recesses 46 (the thin portion 45 of the bipolar plate 4α in this example). When the depth of the engaging recesses 46 is 10% or more of the thickness of the member forming the engaging recesses 46, the state in which the engaging protrusions 56 engage the engaging recesses 46 can be firmly maintained. When the depth of the engaging recesses 46 is 50% or less of the thickness of the member forming the engaging recesses 46, the strength of the member itself can be sufficiently maintained. The protruding length of the engaging protrusions 56 formed may be set according to the depth of the engaging recesses 46. When a space that allows each engaging recess 46 and a corresponding engaging protrusions 56 to move in the width direction of the engaging recess 46 (the vertical direction in Figure 8) is provided between the engaging recess 46 and the engaging protrusion 56, the engaging protrusion 56 can be easily disposed in the engaging recess 46.

In this example, since the bipolar plate 4α is formed of the titanium-based material, the strength of the bipolar plate 4α itself is high even when the engaging recesses 46 are provided in the bipolar plate 4α, and the frame body 5α is prevented from undergoing excessive stress. The engaging protrusions may be provided in the bipolar plate 4α, and the engaging recesses may be provided in the frame body 5α. Even in this case, the strength of the engaging protrusions is high, and the frame body 5α is prevented from undergoing excessive stress, and damage of the engaging protrusions due to the stress can be prevented.

### «Embodiment 5»

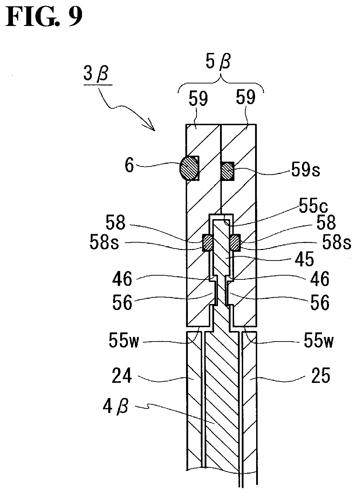

In embodiment 5, a description will be given of an RF battery including cell frames 3β each having a different engagement structure in which a bipolar plate 4β and a frame body 5β engage each other, as shown in Figure 9. In each cell frame 3β in this example, the frame body 5β is formed by joining a pair of frame pieces 59 together such that a thin portion 45 of the bipolar plate 4β is sandwiched between inner circumferential recesses 55c of the frame pieces 59. A sealing member 59s is interposed between the pair of frame pieces 59. The RF battery according to embodiment 5 differs from embodiment 4 in that the frame body 5β is composed of the pair of frame pieces 59 and that the engaging recesses 46 are formed on both side of the bipolar plate 4β. The other components are the same as those in embodiment 4.

In this example, each frame piece 59 has engaging protrusions 56, and the engaging recesses 46 are provided in the thin portion 45 of the bipolar plate 4β so as to correspond to the engaging protrusions 56. Since the thin portion 45 of the bipolar plate 4β is sandwiched between the pair of frame pieces 59, the engaging recesses 46 are formed on both sides of the thin portion 45. The engaging recesses 46 are disposed at positions opposed to each other. In this case also, since the bipolar plate 4β is formed of the titanium-based material in this example, the strength of the bipolar plate 4β itself is high, and the frame body 5β is prevented from undergoing excessive stress.

The present invention is not limited to the above examples but is defined by the claims. The present invention is intended to cover any modifications within the scope of the claims and meaning equivalent to the scope of the claims. For example, in a titanium-based bipolar plate having grooves on its surface, the grooves may be horizontal grooves. When the grooves include introduction-side grooves and discharge-side grooves, the introduction-side grooves and the discharge-side grooves may not be disposed alternately in an intermeshing manner but may be disposed so as to face each other with a spacing in the circulating direction of the electrolytes. Engagement structures may be provided in frame bodies and titanium-based bipolar plates having grooves on their surface.

### [Test Example 1]

A titanium-based bipolar plate was immersed in an electrolyte (immersion solution) with a specific oxidation-reduction potential relative to the standard hydrogen electrode, and the rate of reduction in the thickness of the bipolar plate was examined as temporal changes. In this example, the electrolyte contains no active material, and the state in which the active material was contained was simulated by applying a potential between the titanium-based bipolar plate and the standard hydrogen electrode.

### - Sample No. 1-1

A bipolar plate (size: 25 mm × 50 mm, thickness: 0.5 mm) formed of pure titanium and 2 mol/L sulfuric acid (immersion solution) were prepared.

The bipolar plate was immersed in the immersion solution, and a potential was applied between the titanium-based bipolar plate and the standard hydrogen electrode. The potential was maintained such that the oxidation-reduction potential relative to the standard hydrogen electrode was 0.0 V.

### - Sample No. 1-2

A bipolar plate (size: 25 mm × 50 mm, thickness: 0.5 mm) formed of a titanium alloy (Ti-0.15 Pd) and 2 mol/L sulfuric acid (immersion solution) were prepared.

The bipolar plate was immersed in the immersion solution, and a potential was applied between the titanium-based bipolar plate and the standard hydrogen electrode and maintained such that the oxidation-reduction potential relative to the standard hydrogen electrode was 0.0 V, as in sample No. 1-1.

### - Sample No. 1-3

A bipolar plate (size: 25 mm × 50 mm, thickness: 0.5 mm) formed of a titanium alloy (Ti-0.4 Ni-0.015 Pd-0.025 Ru-0.14 Cr) and 2 mol/L sulfuric acid (immersion solution) were prepared.

The bipolar plate was immersed in the immersion solution, and a potential was applied between the titanium-based bipolar plate and the standard hydrogen electrode and maintained such that the oxidation-reduction potential relative to the standard hydrogen electrode was 0.0 V, as in sample No. 1-1.

### - Sample No. 1-11

A bipolar plate (size: 25 mm × 50 mm, thickness: 0.5 mm) formed of pure titanium and 2 mol/L sulfuric acid (immersion solution) were prepared.

The bipolar plate was immersed in the immersion solution, and a potential was applied between the titanium-based bipolar plate and the standard hydrogen electrode and maintained such that the oxidation-reduction potential relative to the standard hydrogen electrode was -0.1 V.

For each of the samples described above, the amount of dissolution of the materials forming the bipolar plate was measured after one month, and the amount of dissolution was converted to the rate of reduction in the thickness of the bipolar plate. The results are shown in Table 1. In Table 1, the rate of reduction in the thickness of the bipolar plate after one month is multiplied by 12, and the rate of reduction after one year is shown.

**[Table 1]**

| Sample No. | Bipolar plate | Oxidation-reduction potential relative to standard hydrogen electrode | Rate of reduction in thickness |
|---|---|---|---|
| | | (V) | (*µ*m/year) |
| 1-1 | Pure titanium | 0.0 | 50 |
| 1-2 | Ti-0.15Pd | 0.0 | 0.5 |
| 1-3 | Ti-0.4Ni-0.015Pd-0.025Ru-0.14Cr | 0.0 | 5 |
| 1-11 | Pure titanium | -0.1 | 160 |

As can be seen from Table 1, in samples Nos. 1-1 to 1-3 in which the oxidation-reduction potential relative to the standard hydrogen electrode is 0.0 V, the rate of reduction in the thickness is reduced by about 70% as compared with that of sample No. 1-11 in which the oxidation-reduction potential relative to the standard hydrogen electrode is -0.1 V. This may be because of the following reason. Since a passivation film was formed on the surface of the bipolar plate, dissolution of the passivation film was prevented, so that oxidative deterioration of the bipolar plate was reduced. In particular, when the bipolar plate is formed of a titanium alloy, the rate of reduction in thickness can be further reduced.

### [Test Example 2]

An RF battery was produced using bipolar plates (size: 25 mm × 50 mm, thickness: 0.5 mm) formed of pure titanium. A charge and discharge test was performed using different electrolytes, and the rate of reduction in the thickness of the bipolar plates was examined as temporal changes.

### - Sample No. 2-1

A stack of a positive electrode, a negative electrode, and a membrane was sandwiched between a pair of cell frames to produce an RF battery having a single cell structure. Carbon paper (10AA manufactured by SGL CARBON JAPAN Co., Ltd.) was used for the positive electrode and the negative electrode, and Nafion (registered trademark) 212 manufactured by DuPont was used for the membrane. The positive electrolyte used was an aqueous sulfuric acid solution electrolyte containing manganese ions as the active material and further containing titanium ions as metal ions not serving as the active material. Their concentrations are manganese ions: 1 mol/L, titanium ions: 1 mol/L, and sulfuric acid: 5 mol/L. The oxidation-reduction potential of the positive electrolyte relative to the standard hydrogen electrode was 1.5 V. The negative electrolyte used was an aqueous sulfuric acid solution electrolyte containing titanium ions as the active material and further containing manganese ions as metal ions not serving as the active material. Their concentrations are titanium ions: 1 mol/L, manganese ions: 1 mol/L, and sulfuric acid: 5 mol/L. The oxidation-reduction potential of the negative electrolyte relative to the standard hydrogen electrode was 0.1 V.

### - Sample No. 2-2

An RF battery having a layered structure including a plurality of stacked battery cells was produced using the positive electrode, the negative electrode, and the membrane in sample No. 2-1. The positive electrolyte and negative electrolyte used were the same as those in sample No. 2-1.

### - Sample No. 2-3

An RF battery having the same single cell structure as that in sample No. 2-1 was produced. The positive electrolyte was prepared by adding copper (Cu) to the positive electrolyte in sample No. 2-1 in an amount of 1 mmol/L. The negative electrolyte was prepared by adding copper (Cu) to the negative electrolyte in sample No. 2-1 in an amount of 1 mmol/L. The oxidation-reduction potentials of the positive and negative electrolytes relative to the standard hydrogen electrode were the same as those of sample No. 2-1.

### - Sample No. 2-11

An RF battery having the same single cell structure as in sample No. 2-1 was produced. An aqueous sulfuric acid solution containing vanadium ions as the active material was used for both the positive electrolyte and the negative electrolyte. Their concentrations were vanadium ions: 1 mol/L and sulfuric acid: 5 mol/L. The oxidation-reduction potential of the negative electrolyte relative to the standard hydrogen electrode was -0.3 V.

For each of the samples described above, each battery cell was charged and discharged using a constant current with a current density of 70 mA/cm². In this test, a continuous charge/discharge test in which charging was changed to discharging when a prescribed switching voltage was reached was performed for one month. The rate of reduction in the bipolar plates after one month was measured. To measure the rate of reduction in the bipolar plates, part of the bipolar plates were masked in advance, and the step height between the masked portion and the unmasked portion was measured. The step height was used as the reduction in the thickness of the bipolar plates. The results are shown in Table 2. In Table 2, the rate of reduction in the thickness of the bipolar plates after one month is multiplied by 12, and the rate of reduction after one year is shown.

**[Table 2]**

| Sample No. | Electrolyte | Oxidation-reduction potential relative to standard hydrogen electrode | Rate of reduction in thickness |
|---|---|---|---|
| | | (V) | (*µ*m/year) |
| 2-1 | TiMn(1mol/L, 1mol/L, sulfuric acid 5mol/L) | 0.1 | 10 |
| 2-2 | TiMn (lmol/L, 1mol/L, Sulfuric acid 5mol/L) | 0.1 | 10 |
| 2-3 | TiMn (lmol/L, 1mol/L, sulfuric acid 5mol/L) +Cu (1 mmol/L) | 0.1 | 5 |
| 2-11 | V(1mol/L, sulfuric acid 5mol/L) | -0.3 | 500 |

As can be seen from Table 2, in samples Nos. 2-1 to 2-3 in which the negative electrolyte containing titanium ions as the active material was used, the oxidation-reduction potential was 0.1 V, and the rate of reduction in thickness can be reduced by about 98% as compared with that of sample No. 2-11 in which vanadium ions were used as the active material and the oxidation-reduction potential was -0.3 V. This may be because of the following reason. Since a passivation film was formed on the surface of the bipolar plates, dissolution of the passivation film was prevented, so that oxidative deterioration (dissolution) of the bipolar plates was reduced. In particular, when the electrolytes contain Cu, the rate of reduction can be further reduced.

### Reference Signs List

1 redox flow battery (RF battery)
2 battery cell
   21 membrane, 22 positive cell, 23 negative cell, 24 positive electrode
   25 negative electrode, 200P positive electrolyte circulation mechanism, 200N negative electrolyte circulation mechanism
   202 positive electrolyte tank, 203 negative electrolyte tank
   204, 205, 206, 207 pipe
   208, 209 pump
3, 3α, 3β cell frame
4, 4A, 4B, 4α, 4β bipolar plate
   40 bipolar plate piece, 41 groove, 41p positive-side groove
   41n negative-side groove, 41i introduction-side groove, 41o discharge-side groove
   42 rib portion, 45 thin portion, 46 engaging recess
5, 5α, 5β frame body
   51, 52 liquid supply manifold
   53, 54 liquid discharge manifold
   51s, 52s liquid supply guide groove
   53s, 54s liquid discharge guide groove
   55c inner circumferential recess, 55w opening, 56 engaging protrusion
   58 sealing groove, 58s sealing member
   59 frame piece, 59s sealing member
6 sealing member
9 cell stack, 9S sub stack
   91, 92 end plate, 93 connecting member

## Claims

1. A redox flow battery comprising:
a battery cell including a positive electrode, a negative electrode, and a membrane interposed between the positive electrode and the negative electrode;
a pair of cell frames each including a bipolar plate and a frame body surrounding a circumferential edge of the bipolar plate, the pair of cell frames holding the battery cell therebetween;
a positive electrolyte supplied to the positive electrode; and
a negative electrolyte supplied to the negative electrode,
wherein the bipolar plate is formed of pure titanium or a titanium alloy, and
wherein the negative electrolyte has an oxidation-reduction potential of 0.0 V or higher relative to a standard hydrogen electrode.

2. The redox flow battery according to claim 1,
wherein the titanium alloy contains 95% by mass or more of titanium and further contains at least one element selected from platinum, palladium, ruthenium, nickel, and chromium in a total amount of 0.4% by mass or more and 5% by mass or less.

3. The redox flow battery according to claim 1 or 2,
wherein the negative electrolyte contains at least one active material selected from titanium ions, iron ions, manganese ions, and cerium ions.

4. The redox flow battery according to any one of claims 1 to 3,
wherein the concentration of hydrogen ions in the negative electrolyte is 0.1 mol/L or more.

5. The redox flow battery according to any one of claims 1 to 4,
wherein the negative electrolyte contains sulfate radicals, and
wherein the concentration of the sulfate radicals in the negative electrolyte is 2 mol/L or more.

6. The redox flow battery according to any one of claims 1 to 5,
wherein the negative electrolyte contains at least one metal selected from iron, copper, antimony, and platinum in a total amount of 0.01 mmol/L or more and 0.1 mol/L or less.

7. The redox flow battery according to any one of claims 1 to 6,
wherein the bipolar plate includes grooves through which the positive electrolyte or the negative electrolyte circulates, the grooves being provided on at least one of a positive electrode-side surface in contact with the positive electrode and a negative electrode-side surface in contact with the negative electrode.

8. The redox flow battery according to claim 7,
wherein the grooves are formed on both the positive electrode-side surface and the negative electrode-side surface by bending the bipolar plate.

9. The redox flow battery according to claim 7 or 8,
wherein the bipolar plate is formed by stacking two bipolar plate pieces, and the grooves are provided on both the positive electrode-side surface and the negative electrode-side surface.

10. The redox flow battery according to any one of claims 1 to 9,
wherein, in the bipolar plate, the distance between a positive electrode-side surface in contact with the positive electrode and a negative electrode-side surface in contact with the negative electrode is 3 mm or more and 7 mm or less.

11. The redox flow battery according to any one of claims 1 to 10, further comprising:
an engaging protrusion that is provided in one of the bipolar plate and the frame body; and
an engaging recess that is provided in the other one of the bipolar plate and the frame body and engages the engaging protrusion.
